# EUROPEAN PATENT APPLICATION

(11) **EP 4 461 428 A1**
(43) Date of publication of application: **13.11.2024**
(21) Application number: 23184681.7
(22) Date of filing: 11.07.2023
(51) Int. Cl.: B21C 23/06, B21C 35/02

(54) **METHOD OF MANUFACTURING WIDE EXTRUDED PLATE FOR ROLLING**

(30) Priority: 09.05.2023 KR 20230059878
(71) Applicant: Alutec Co., Ltd., Chungcheongnam-do (KR)
(72) Inventor: PARK, Do Bong, Seoul (KR)
(74) Representative: dompatent von Kreisler Selting Werner - Partnerschaft von Patent- und Rechtsanwälten mbB

(57) **Abstract**

Disclosed is a method of manufacturing a wide extruded plate with a wide width using a small or medium extruder, in which the wide extruded plate having a wide width is manufactured using relatively small equipment by producing a corrugated extruded plate having a curved cross-section in a hot extrusion stage, and flattening the curved cross-section by allowing the extruded plate to pass between leveling rollers.

## Description

### BACKGROUND OF THE INVENTION

### Field of the Invention

The present invention relates to a method of manufacturing a plate, and more particularly, to a method of manufacturing a wide extruded plate with a wide width using a small or medium extruder.

That is, the present invention relates to a method of manufacturing a wide extruded plate in which the wide extruded plate having a wide width may be manufactured using relatively small equipment while overcoming the limit of an extrusion width depending on the capacity of an extruder by producing a corrugated extruded plate having a curved cross-section in a hot extrusion stage, and flattening the curved cross-section by allowing the extruded plate to pass between upper and lower rollers.

### Description of the Related Art

Metal plates are being used as materials in various fields, and these metal plates are generally manufactured using rolling.

A rolled metal plate is manufactured by producing a slab through casting by dissolving and alloying metals, producing a flat plate by hot-rolling the slab, and then cold-rolling the flat plate wound into a coil. Further, in order to manufacture a wide rolled plate, the width of a mold for slab casting needs to be increased, and thus, a casting mold having a wide width is separately required, and not only hot rolling rolls but also cold rolling rolls should be manufactured to have a wide width.

As technologies relating to rolled plates, various technologies, including technology to reduce a defect rate or to simplify a manufacturing process, are being developed, and for example, there are Patent Documents 1 to 4.

Patent Document 1 discloses a hot rolling system including a work roll configured to roll a material coming into the hot rolling system, a cooling unit configured to divide the work roll into a plurality of cooling areas in the length direction of the work roll and to individually spray cooling water having cooling temperatures set depending on the respective cooling areas to the cooling areas, and a controller configured to set the cooling temperatures of the respective cooling areas using a database, in which degrees of thermal expansions of the cooling areas of the work roll and degrees of thickness profile change of the cooling areas depending on the cooling temperatures are stored, and to output the set cooling temperatures to the cooling unit.

Patent Document 2 discloses a hot rolling apparatus for a titanium plate, including a heater configured to heat the titanium plate, a rough rolling unit configured to perform rough rolling of the titanium plate, and a transfer unit configured to transfer the titanium plate from the heater to the rough rolling unit, skid cooling parts are formed at positions of the titanium plate supported by skids of the heater, the transfer unit includes heating sections configured to heat the skid cooling parts of the titanium plate, and the rough rolling unit includes feed rolls installed at entrance and exit sides of the rough rolling unit and configured to supply the titanium plate, work rolls configured to roll the titanium plate supplied by the feed rolls, and guides located between the feed rolls and the work rolls and configured to guide the titanium plate.

Patent Document 3 discloses a metal plate rolling apparatus including at least a pair of upper and lower work rolls, a pair of upper and lower back-up rolls, a pair of work roll chokes configured to hold and support the respective work rolls, a housing or project blocks configured to hold and support the work roll chokes, and load detectors installed in the work roll chokes so as to face the housing or the project blocks and configured to detect a load in a rolling direction applied to the work roll chokes at at least one of the inlet and the outlet in the rolling direction, and at least one load detector is disposed in each of the work roll chokes so that a force point in the rolling direction of the work roll is within a range prescribed by the corresponding load detector so as to achieve a balance between rotational moment occurring in the work roll choke by force in the rolling direction and reverse rotational moment occurring by reaction force to the corresponding rotational moment.

Patent Document 4 discloses a method of manufacturing a high-strength aluminum rolled plate, including a) melting an aluminum alloy material including 5.1 to 5.9 wt% of copper (Cu), 0.6 to 0.9 wt% of magnesium (Mg), 0.25 to 0.6 wt% of manganese (Mn), 0.15 to 0.25 wt% of silver (Ag), 0.07 to 0.13 wt% of zirconium (Zr), 0.04 to 0.1 of silicon (Si), 0.09 to 0.15 wt% of iron (Fe), more than 0 wt% to 0.1 wt% of titanium (Ti), 0.02 to 0.05 wt% of vanadium (V), and the balance of aluminum (Al) and inevitable impurities, b) casting the molten aluminum alloy, c) performing homogenization treatment of the cast aluminum alloy, d) reheating the homogenized aluminum alloy, e) hot-rolling the reheated aluminum alloy, f) performing solution treatment of the hot-rolled aluminum alloy, g) cold-rolling a rolled aluminum plate produced by solution treatment, h) performing primary aging treatment of the rolled aluminum plate having undergone the cold-rolling, and i) performing secondary aging treatment of the primarily aging-treated rolled aluminum plate, operation h) is performed at a temperature of 20 to 40 °C for 20 to 200 hours, and operation i) includes i-1) maintaining the rolled aluminum plate at a temperature of 160 to 200 °C for 1 to 20 hours, and i-2) air-cooling the plate having undergone operation i-1).

The above-described various rolled plate manufacturing technologies have been developed, and in these cases, the thickness of a plate is adjusted by rolling a slab while passing through work rolls of a rolling mill.

A rolled plate manufactured by plate rolling technology using such a conventional rolling mill extends in the length direction but does not extend in the width direction to maintain the initial width of a slab during a rolling process and thus, in order to perform wide rolling, a wide slab should be cast and rolled, and therefore, the sizes of not only a slab manufacturing device but also a hot rolling mill and a cold rolling mill should be increased. Such a problem also occurs in extrusion, wide extrusion has a clear limitation because a supersized billet should be cast and a supersized extrusion mold for large extruders, which may facilitate wide extrusion should be manufactured, and has problems in which manufacture of a hot extruded material having a thickness of 10 T or more additionally requires hot rolling, and the thickness of an extruded material should be increased so as to reduce increase in a pressure applied to the extruder and the extrusion mold as the size of the extruder increases.

Therefore, such increase in the size of the extruder to perform wide extrusion increases the investment cost of equipment exponentially and thus increases the burden of an extrusion company, the production cost of the supersized extrusion mold for wide extrusion is very high, and, as the pressure applied to the extrusion mold increases, the lifespan of the extrusion mold is shortened, and thus causes increase in process cost.

### RELATED ART DOCUMENT

### PATENT DOCUMENT

(Patent Document 1) Korean Patent Registration No. 10-1328216
(Patent Document 2) Korean Patent Registration No. 10-1485642
(Patent Document 3) Korean Patent Registration No. 10-1639145
(Patent Document 4) Korean Patent Registration No. 10-2487222

### SUMMARY OF THE INVENTION

Therefore, the present invention has been made in view of the above problems, and it is an object of the present invention to provide a method of manufacturing a wide extruded plate with a wide width using a small or medium extruder.

It is another object of the present invention to provide a method of manufacturing a wide extruded plate in which the wide extruded plate having a wide width may be manufactured using relatively small equipment by producing a corrugated extruded plate having a curved cross-section in a hot extrusion stage, and flattening the curved cross-section by allowing the extruded plate to pass between upper and lower rollers.

In accordance with the present invention, the above and other objects can be accomplished by the provision of a method of manufacturing a wide extruded plate for rolling, including preheating a billet having a circular or oval cross-section, extruding a plate having a curved cross-section in a width direction from the preheated billet using an extrusion mold having a curved molding hole formed therein, and flattening the extruded plate using leveling rollers provided in at least two stages.

In preheating the billet, a preheating temperature may be 400 - 550 °C.

Flattening the extruded plate may be performed before winding the extruded plate into a coil.

A cross-section of the extruded plate, produced in extruding the plate, may be formed in a type in which a sinusoidal wave is symmetrically repeated.

Flattening the extruded plate may be performed before cooling the extruded plate or after cooling the extruded plate.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a flowchart representing one exemplary manufacturing process in a method of manufacturing a wide plate according to the present invention;
FIG. 2 is a flowchart representing another exemplary manufacturing process in the method according to the present invention; and
FIGs. 3(a) to 3(c) are cross-sectional views showing different examples of a curved extruded plate produced in an extrusion stage and a flat extruded plate produced in a flattening stage in the method according to the present invention.

### DETAILED DESCRIPTION OF THE INVENTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

In the drawings, the same or similar elements are denoted by the same reference numerals even though they are depicted in different drawings. In the following description of the present invention, a detailed description of known functions and configurations incorporated herein will be omitted when it may make the subject matter of the present invention rather unclear.

According to the present invention, a wide extruded material having a wide width may be manufactured using a small or medium extruder.

A method of manufacturing a wide extruded plate for rolling according to the present invention includes preheating a billet having a circular or oval cross-section, extruding a plate having a curved cross-section in the width direction from the preheated billet using an extrusion mold having a curved molding hole formed therein, and flattening the extruded plate using leveling rollers.

In the conventional hot-rolled plate manufacturing methods, as described above, a plate is manufactured by rolling an extruded material or hot-rolling and then cold-rolling a cast slab, the width of the manufactured plate is scarcely increased during hot-rolling or cold-rolling, and therefore, there are problems in that, in order to manufacture a plate having a relatively wide width, a slab having a very large size (width) should be cast, or wide extrusion should be performed using an extruder having a very large capacity during extrusion, a supersized extrusion mold which may perform extrusion through a large extruder should be made and used to perform wide extrusion, and manufacture of a hot extruded material having a thickness of 10 T or more additionally requires hot rolling. That is, a pressure applied to the extruder and the extrusion mold is increased as the size of the extruder increases and therefore, in order to reduce the increase in the pressure, the thickness of the extruded material should be increased.

Further, increase in the size of the extruder to perform wide extrusion increases the investment cost of equipment exponentially and thus increases the burden of an extrusion company, the production cost of the supersized extrusion mold for wide extrusion is very high, and, as the pressure applied to the extrusion mold increases, the lifespan of the extrusion mold is shortened, and thus causes increase in process cost.

However, in the present invention, as described above, an extruded plate may be manufactured using a small or medium extruder by extruding a plate having a curved cross-section in the width direction in an extrusion stage, and flattening the curved cross-section in a flattening stage.

That is, in the method according to the present invention, when the plate having the curved cross-section is extruded using a small or medium extruder having a maximum width of 450 mm or less, and is then flattened by passing rolls in the operation of flattening the extruded plate, the width of a final rolled plate may be extended up to 900 mm at maximum and, when the operation of extruding the plate is performed using an extruder capable of extruding a plate having a width of 650 mm, the width of a final rolled plate may be extended up to 1,300 mm at maximum, and therefore, a large plate may be manufactured using a relatively small extruder.

Therefore, an extruded material is extruded using a small or medium extruder and may thus be manufactured to have a thickness of 10 T or less, and no burden is applied to the extruder and thus shortening of the lifespans of the extruder and an extrusion mold may be prevented.

Further, as a rolled plate having a relatively wide width may be manufactured using a small or medium extruder, a large extruder and a large extrusion mold are not used and thus investment cost thereof may be eliminated, and, as the curved cross-section of the extruded material is flattened into a flat cross-section and the extruded material having the flat cross-section is wound into a coil before being completely cooled, a load applied to the leveling rollers may be reduced.

The above operation of flattening the extruded plate, in which the extruded plate having the curved cross-section is flattened into a flat plate, may be performed in front of a coil winder, and the corrugated extruded plate may be flattened by allowing the height of the rollers to be adjusted using the principle of levelers.

As one example of the operation of flattening the extruded plate, an inlet is configured to maintain a gap of about 60 mm or more so that the extruded material is put into the inlet, the rollers are provided in multiple stages such that a gap between the rollers is gradually narrowed and thus a final gap is set to 8-10 mm, and particularly, the rollers are provided in at least two stages so that the corrugated extruded plate is flattened while sequentially passing through the multistage rollers.

In the operation of preheating the billet, a preheating temperature may be 400 - 550 °C, and the operation of flattening the extruded plate may be performed prior to the operation of winding the extruded plate into the coil.

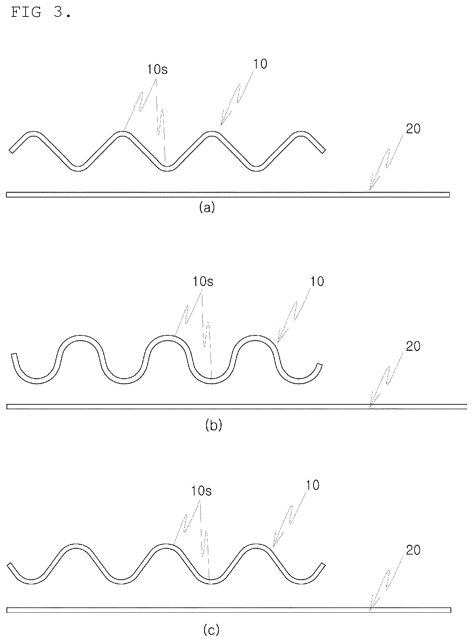

The cross-section of the extruded plate produced in the operation of extruding the plate may be curved in various types, as shown in FIGs. 3(a) to 3(c), and particularly, may be formed in a type in which the angle of vertical parts is 90 degrees or less and thus a sinusoidal wave is symmetrically repeated, so as to facilitate flattening work.

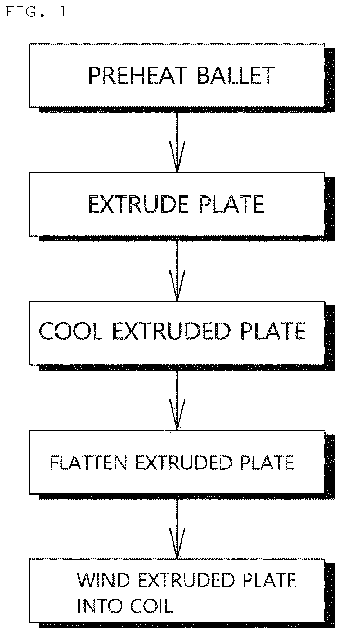

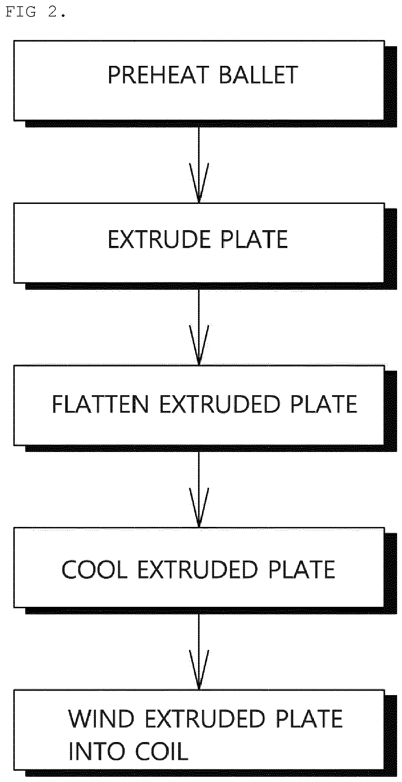

The operation of flattening the corrugated extruded plate may be performed before the operation of cooling the extruded plate, as shown in FIG. 2, or may be performed after the operation of cooling the extruded plate, as shown in FIG. 1, and thereafter, the flattened extruded plate may be manufactured into the coil.

In a conventional hot-extruded plate manufacturing method, an extruded plate having a width of 450 mm or greater may not be manufactured using a 12 inch extruder and an extruded plate having a width of 600 mm or greater may not be manufactured using a 17 inch extruder, but, in the above-described method according to the present invention, the extruded plate having the curved cross-section may be obtained by extrusion, and thus, an extruded plate having a wide width which is in the range of 10% of the maximum width to 2 times the maximum width, which may be obtained using an extruder, may be manufactured.

That is, a wide extruded plate for rolling having a flat cross-section and a width, which is up to 2 times the width of the extruded plate having the corrugated cross-section in the width direction at maximum, may be manufactured by flattening the extruded plate having the corrugated cross-section, i.e., a sinuous cross-section.

As is apparent from the above description, in a method of manufacturing a wide extruded plate according to the present invention, the wide extruded plate having a relatively wide width compared to extruded plates manufactured using the conventional extruders may be manufactured by producing a corrugated extruded plate having a curved cross-section using a small or medium extruder, and flattening the curved cross-section in a flattening stage.

Further, in the present invention, the extruded plate may be produced using the small or medium extruder and may thus have a thickness of 10 T or less, and no burden is applied to the extruder and thus shortening of the lifespans of the extruder and an extrusion mold may be prevented. Further, as a hot-rolled plate having a relatively wide width may be manufactured using the small or medium extruder, a large extruder and a large extrusion mold are not required and thus investment cost thereof may be eliminated.

Moreover, a run-out table adhered to the conventional extruder may be used without alternation of the width thereof, and thus, investment cost required for equipment modification may be eliminated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of manufacturing a wide extruded plate for rolling, comprising:
preheating a billet having a circular or oval cross-section;
extruding a plate having a curved cross-section in a width direction from the preheated billet using an extrusion mold having a curved molding hole formed therein; and
flattening the extruded plate using leveling rollers provided in at least two stages.

2. The method according to claim 1, wherein, in preheating the billet, a preheating temperature is 400 - 550 °C.

3. The method according to claim 1, wherein flattening the extruded plate is performed before winding the extruded plate into a coil.

4. The method according to claim 1, wherein a cross-section of the extruded plate, produced in extruding the plate, is formed in a type in which a sinusoidal wave is symmetrically repeated.

5. The method according to claim 1, wherein flattening the extruded plate is performed before cooling the extruded plate or after cooling the extruded plate.
